(19) Europäisches Patentamt
European Patent Office
Office européen des brevets

(11) **EP 3 462 803 B1**

(12) **EUROPEAN PATENT SPECIFICATION**

(45) Date of publication and mention
of the grant of the patent:
**26.07.2023 Bulletin 2023/30**

(21) Application number: **16906691.7**

(22) Date of filing: **30.06.2016**

(51) International Patent Classification (IPC):
***H04W 76/38*** *(2018.01)*       *H04W 84/18* *(2009.01)*

(52) Cooperative Patent Classification (CPC):
**H04W 76/38; H04W 84/18**

(86) International application number:
**PCT/CN2016/087816**

(87) International publication number:
**WO 2018/000290 (04.01.2018 Gazette 2018/01)**

(54) **METHOD FOR MANAGING BLUETOOTH CONNECTION AND MASTER BLUETOOTH DEVICE**

VERFAHREN ZUR VERWALTUNG EINER BLUETOOTH-VERBINDUNG UND
BLUETOOTH-MASTER-VORRICHTUNG

PROCÉDÉ DE GESTION DE CONNEXION BLUETOOTH ET DISPOSITIF MAÎTRE BLUETOOTH ET
APPAREIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.04.2019 Bulletin 2019/14**

(73) Proprietor: **Huawei Technologies Co., Ltd.
Longgang
Shenzhen, Guangdong 518129 (CN)**

(72) Inventors:
• **WANG, Kun
Shenzhen
Guangdong 518129 (CN)**
• **YANG, Nan
Shenzhen
Guangdong 518129 (CN)**

(74) Representative: **Gill Jennings & Every LLP
The Broadgate Tower
20 Primrose Street
London EC2A 2ES (GB)**

(56) References cited:
EP-A2- 0 963 126       WO-A1-2005/109779
WO-A1-2014/208342       CN-A- 104 093 216
CN-A- 105 447 921       JP-A- 2016 046 762
US-A1- 2016 057 803       US-A1- 2016 100 275

## Description

## TECHNICAL FIELD

Embodiments of the present invention relate to the communications field, and more specifically, to a Bluetooth connection management method, and a master Bluetooth device.

## BACKGROUND

The Bluetooth technology is an open standard for wireless data and voice communication. A world-wide frequency band of 2.4 GHz is used in the Bluetooth technology. A data rate of the Bluetooth technology is 1 Mbs. At present, with advantages of low power consumption, a small size, and relatively strong immunity to interference, the Bluetooth technology becomes the most popular means of connecting a smartphone and a slave Bluetooth device.

In the prior art, after a master Bluetooth device establishes a Bluetooth connection to a slave Bluetooth device, another master Bluetooth device cannot connect to the slave Bluetooth device if the master Bluetooth device retains the connection to the slave Bluetooth device, even if no data is being transmitted between the master Bluetooth device and the slave Bluetooth device. This causes a waste of resources.

WO 2014/208342 A1 describes an information processing terminal and a wireless connection control program. The document considers how to allow the termination of a connection established between an iOS terminal and a peripheral device, such as printer or the like, to be easily executed from an application program. It is arranged that: an iOS terminal establishes a wireless connection between the iOS terminal and a Bluetooth-capable printer, transmits print data to the printer, and thereafter transmits, to the printer, a reset command for a Bluetooth module thereof; the Bluetooth module of the printer is reset in response to reception of the reset command; during this reset, the Bluetooth connection established between the iOS terminal and the printer is terminated. In this way, even if no API for terminating the Bluetooth connection is present on the OS side of the iOS terminal, the termination of the connection established between the iOS terminal and the printer can be easily executed from an application program of the iOS terminal.

## SUMMARY

This application provides a Bluetooth connection management method, and a master Bluetooth device as set out in the attached claims. The master Bluetooth device breaks a Bluetooth connection to a slave Bluetooth device when the master Bluetooth device determines that no data is being transmitted with the slave Bluetooth device by using the Bluetooth connection. A user does not need to manually break the Bluetooth connection. So that another master Bluetooth device may establish a Bluetooth connection to the slave Bluetooth device. This avoids a waste of resources.

According to a first aspect, a Bluetooth connection management method is provided. The method is applied to a scenario in which a master Bluetooth device has established a Bluetooth connection to a slave Bluetooth device, the slave Bluetooth device being a sound box or headset configured to receive a data transmission comprising audio data. The method includes: determining, by the master Bluetooth device, whether data is being transmitted with the slave Bluetooth device by using the Bluetooth connection; and breaking, by the master Bluetooth device, the Bluetooth connection to the slave Bluetooth device when the master Bluetooth device determines that no data is being transmitted with the slave Bluetooth device by using the Bluetooth connection.

Therefore, according to the Bluetooth connection management method in this application, the master Bluetooth device breaks the Bluetooth connection to the slave Bluetooth device when the master Bluetooth device determines that no data is being transmitted with the slave Bluetooth device by using the Bluetooth connection. A user does not need to manually break the Bluetooth connection. So that another master Bluetooth device may establish a Bluetooth connection to the slave Bluetooth device. This avoids a waste of resources.

In the first aspect, the determining, by the master Bluetooth device, whether data is being transmitted with the slave Bluetooth device by using the Bluetooth connection includes: determining, by the master Bluetooth device according to a working power of a Bluetooth module in the master Bluetooth device, whether data is being transmitted with the slave Bluetooth device by using the Bluetooth connection.

It may be understood that the working power of the Bluetooth module includes a transmit power and a receive power of the Bluetooth module.

With reference to the first aspect, in a possible implementation of the first aspect, the determining, by the master Bluetooth device according to a working power of a Bluetooth module in the master Bluetooth device, whether data is being transmitted with the slave Bluetooth device by using the Bluetooth connection includes: collecting statistics on, by the master Bluetooth device, a sum of working powers of the Bluetooth module in preset duration; and when the master Bluetooth device determines that the sum of the working powers is less than a preset power threshold, determining, by the master Bluetooth device, that no data is being transmitted with the slave Bluetooth device by using the Bluetooth connection; or when the master Bluetooth device determines that the sum of the working powers is greater than or equal to the preset power threshold, determining, by the master Bluetooth device, that data is being transmitted with the slave Bluetooth device by using the Bluetooth connection.

With reference to the first aspect, in a possible implementation of the first aspect, the determining, by the master Bluetooth device according to a working power of a Bluetooth module in the master Bluetooth device, whether data is being transmitted with the slave Bluetooth device by using the Bluetooth connection includes: starting timing when the master Bluetooth device detects that the working power of the Bluetooth module is less than a preset power threshold; and when the master Bluetooth device detects that duration in which the working power of the Bluetooth module is less than the preset power threshold exceeds preset duration, determining, by the master Bluetooth device, that no data is being transmitted with the slave Bluetooth device by using the Bluetooth connection; or when the master Bluetooth device detects that the working power of the Bluetooth module is greater than or equal to the preset power threshold, or when the master Bluetooth device detects that duration in which the working power of the Bluetooth module is less than the preset power threshold does not exceed the preset duration, determining, by the master Bluetooth device, that data is being transmitted with the slave Bluetooth device by using the Bluetooth connection.

In a possible implementation of the first aspect, after the breaking, by the master Bluetooth device, the Bluetooth connection to the slave Bluetooth device, the method further includes: disabling, by the master Bluetooth device, a Bluetooth function of the master Bluetooth device.

Therefore, when there is no Bluetooth connection between the master Bluetooth device and the slave Bluetooth device, the Bluetooth function of the master Bluetooth device is in a disabled state, thereby reducing power consumption of the master Bluetooth device.

According to a second aspect, a master Bluetooth device is provided, including a processor, a memory, and a Bluetooth module. The processor, the memory, and the Bluetooth module are connected by using a bus system. The memory is configured to store an instruction. The Bluetooth module receives or sends a message according to control of the processor, so as to implement Bluetooth communication between the master Bluetooth device and a slave Bluetooth device, the slave Bluetooth device being a sound box or headset configured to receive a data transmission comprising audio data. The processor is configured to invoke the instruction stored in the memory to execute the method in the first aspect or any possible implementation of the first aspect.

**BRIEF DESCRIPTION OF DRAWINGS**

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1a and FIG. 1b are schematic diagrams of a Bluetooth switch icon according to an example not in accordance with the invention as claimed;

FIG. 2 is a schematic diagram of an application scenario according to an example not in accordance with the invention as claimed;

FIG. 3 is a schematic block diagram of a smartphone according to an example not in accordance with the invention as claimed;

FIG. 4 is a schematic flowchart of a Bluetooth connection management method according to an embodiment of the present invention;

FIG. 5 is a schematic diagram of a user interface of a smartphone according to an example not in accordance with the invention as claimed;

FIG. 6 is a schematic flowchart of a Bluetooth connection management method of another example not in accordance with the invention as claimed;

FIG. 7 is a schematic flowchart of a Bluetooth connection management method according to still another example not in accordance with the invention as claimed;

FIG. 8 is a schematic block diagram of a master Bluetooth device according to an embodiment of the present invention;

FIG. 9 is a schematic block diagram of a master Bluetooth device according to another example not in accordance with the invention as claimed;

FIG. 10 is a schematic block diagram of an apparatus according to an example not in accordance with the invention as claimed;

FIG. 11 is another schematic block diagram of an apparatus according to an example not in accordance with the invention as claimed;

FIG. 12 is a schematic block diagram of an apparatus according to another example not in accordance with the invention as claimed; and

FIG. 13 is another schematic block diagram of an apparatus according to another example not in accordance with the invention as claimed.

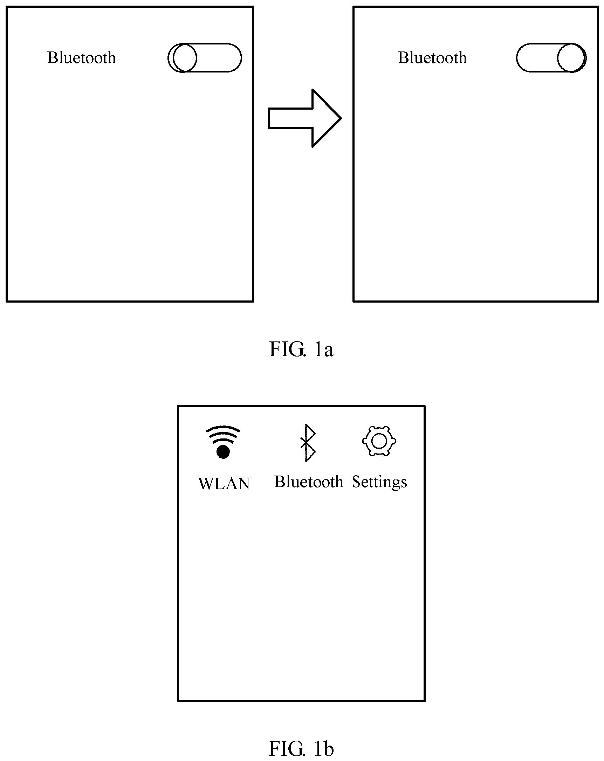

The subject-matter of figures 1-3, 5-7 and 9-13 and their descriptions, even if described or name as "embodiment(s)", "invention(s)", "aspect(s)", "example(s)" or "disclosure(s)" etc., does not fully and thus only partly correspond to the invention as defined in the claims, since one or more features present in and required by the independent claims are missing in the "embodiment(s)", "invention(s)", "aspect(s)", "example(s)" or "disclosure(s)" etc. The subject-matter of figures 1-3, 5-7 and 9-13 and their descriptions is therefore not covered by the claims and is useful to highlight specific aspects of the claims.

## DESCRIPTION OF EMBODIMENTS

The following clearly and completely describes the technical solutions in the embodiments of the present invention with reference to the accompanying drawings in the embodiments of the present invention.

To facilitate understanding of the embodiments of the present invention, several elements introduced in description of the embodiments of the present invention are first described herein.

A master Bluetooth device may search for a slave Bluetooth device around. A user may select a slave Bluetooth device that needs to be connected. The master Bluetooth device may actively initiate Bluetooth pairing, and the master Bluetooth device is matched with the slave Bluetooth device by using a matching password. A smartphone, a personal computer (Personal Computer, "PC" for short), and the like that have a Bluetooth function all belong to master Bluetooth devices.

The slave Bluetooth device is a device that does not actively initiate a Bluetooth pairing request. The slave Bluetooth device generally does not have an input end. Usually, when the slave Bluetooth device is delivered out of a factory, a 4-digit or 6-digit numeral matching password is solidified in a Bluetooth chip of the slave Bluetooth device. A Bluetooth sound box or headset are the slave Bluetooth devices.

In the embodiments of the present invention, breaking, by the master Bluetooth device, a Bluetooth connection to the slave Bluetooth device means breaking, by the master Bluetooth device, a physical layer connection to the slave Bluetooth device. Breaking the Bluetooth connection does not disable a Bluetooth function of the master Bluetooth device. Therefore, the master Bluetooth device may further establish a Bluetooth connection to another slave Bluetooth device.

If the Bluetooth function of the master Bluetooth device is disabled, that is, a Bluetooth module does not work, the master Bluetooth device cannot establish a Bluetooth connection to another slave Bluetooth device.

Enabling and disabling of the Bluetooth function may be operated by using a Bluetooth switch icon on the master Bluetooth device. FIG 1a shows the Bluetooth switch icon on the master Bluetooth device. The Bluetooth function is disabled in a left diagram in FIG. 1a. The Bluetooth function is enabled in a right diagram in FIG.

1a. FIG. 1b shows another form of a Bluetooth switch icon. When a user taps the Bluetooth switch icon and the Bluetooth switch icon turns gray, the Bluetooth function is disabled. When the user taps the Bluetooth switch and the Bluetooth switch icon is highlighted, the Bluetooth function is enabled. When the Bluetooth function is disabled, the master Bluetooth device breaks the Bluetooth connection to the slave Bluetooth device. Generally, if there is a paired slave Bluetooth device on the master Bluetooth device, the slave Bluetooth device may be connected by using a menu operation, or a connection to the slave Bluetooth device may be broken by using a menu operation. Alternatively, pairing with the paired slave Bluetooth device may be canceled by using a menu operation. Pairing information is still retained when the master Bluetooth device breaks the Bluetooth connection to the slave Bluetooth device. No pairing is required again next time the slave Bluetooth device is connected. If the pairing between the master Bluetooth device and the slave Bluetooth device is canceled, pairing is required first next time a Bluetooth connection is established.

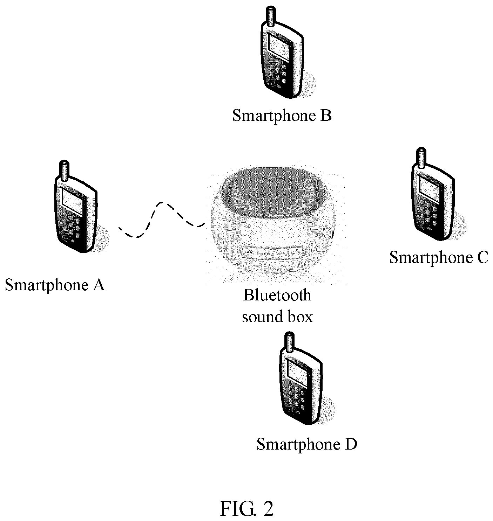

The embodiments of the present invention are applied to a scenario in which a master Bluetooth device and a slave Bluetooth device exchange data by establishing a Bluetooth connection. As shown in FIG. 2, smartphones A to D are master Bluetooth devices, and a Bluetooth sound box is a slave Bluetooth device. According to a method in the prior art, when the smartphones A to D need to be paired with or connected to the Bluetooth sound box, a user needs to manually enable a Bluetooth function of the smartphones A to D. In addition, after the smartphone A establishes a Bluetooth connection to the Bluetooth sound box, the user needs to manually turn off a Bluetooth switch of the smartphone A or manually break the Bluetooth connection. Then one of the smartphones B to D can establish a connection to the Bluetooth sound box. Otherwise, even if no data is transmitted between the smartphone A and the Bluetooth sound box, the smartphone A still retains the Bluetooth connection to the Bluetooth sound box and occupies a channel. The smartphones B to D cannot establish a Bluetooth connection to the Bluetooth sound box, thereby causing a waste of resources.

On such a basis, a Bluetooth connection management method may be provided, to avoid a waste of resources.

The following describes a Bluetooth connection management method in an embodiment of the present invention by using an example in which a master Bluetooth device is a smartphone. It may be understood that the smartphone is used as an example merely for ease of description and does not constitute a limitation on the protection scope of the embodiments of the present invention.

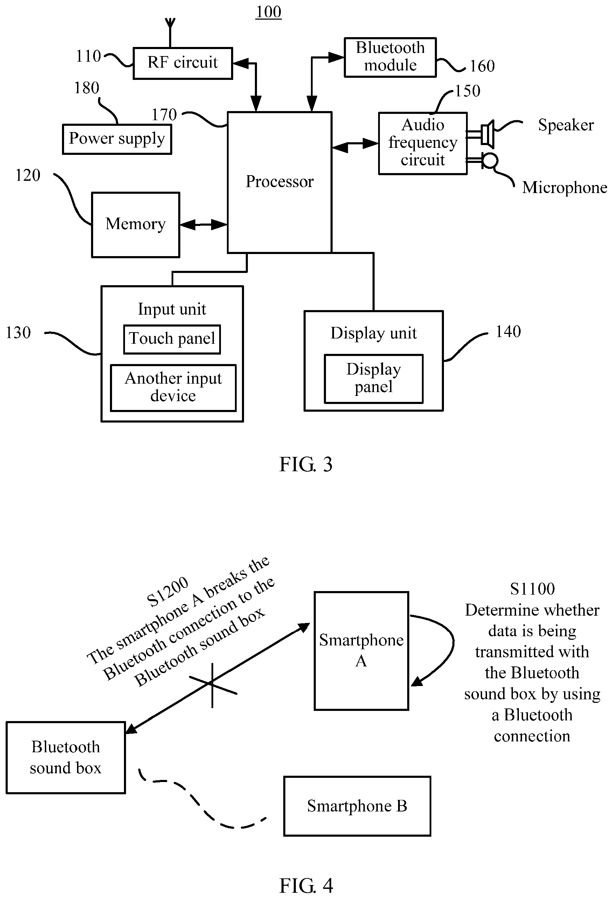

FIG. 3 is a block diagram of a partial structure of a smartphone 100 related to an embodiment of the present invention. Referring to FIG. 3, the smartphone 100 includes components such as a radio frequency (Radio Frequency, "RF" for short) circuit 110, a memory 120, an input unit 130, a display unit 140, an audio frequency circuit 150, a Bluetooth module 160, a processor 170, and a power supply 180. A person skilled in the art may understand that the smartphone structure shown in FIG. 3 does not constitute a limitation on the smartphone. The smartphone may include more or fewer components than those shown in the figure, or may combine some components, or may have a different component layout.

For example, the smartphone may further include a sensor, a camera, a Wireless Fidelity (Wireless Fidelity, "WiFi" for short) module, and the like. Details are not described herein.

In this embodiment of the present invention, the RF circuit 110 may be configured to receive/transmit information, or receive or send a signal in a call process. Particularly, the RF circuit 110 receives downlink information of a base station and sends the downlink information to the processor 170 for processing. In addition, the RF circuit 110 sends uplink data to the base station. Generally, the RF circuit 110 includes but is not limited to an antenna, at least one amplifier, a transceiver, a coupler, a low noise amplifier (Low Noise Amplifier, "LNA" for short), a duplexer, and the like. In addition, the RF circuit 110 may further communicate with a network and another device by means of wireless communication. Any communications standard or protocol may be used for the wireless communication, including but not limited to a Global System for Mobile Communications (Global System of Mobile Communication, "GSM" for short), a general packet radio service (General Packet Radio Service, "GPRS" for short), Code Division Multiple Access (Code Division Multiple Access, "CDMA" for short), Wideband Code Division Multiple Access (Wideband Code Division Multiple Access, "WCDMA" for short), Long Term Evolution (Long Term Evolution, "LTE" for short), an email, a short messaging service (Short Messaging Service, "SMS" for short), and the like.

The memory 120 may be configured to store a software program and a module. The processor 170 runs the software program and the module that are stored in the memory 120 to perform various function applications and data processing of the smartphone 100. The memory 120 may mainly include a program storage area and a data storage area. The program storage area may store an operating system, an application required by at least one function (such as a sound playback function or an image playback function), and the like. The data storage area may store data (such as audio data and a phone book) created according to use of the smartphone 100 and the like. In addition, the memory 120 may include a high-speed random access memory, or may include a nonvolatile memory, for example, at least one disk storage component, a flash memory component, or another volatile solid-state storage component.

The input unit 130 may be configured to receive inputted numerical or character information, and generate a key signal input that is related to a user setting and function control of the smartphone 100. Specifically, the input unit 130 may include a touch panel and another input device. The touch panel is also referred to as a touchscreen, and is capable of collecting a touch operation of a user on or near the touch panel (such as an operation performed by the user on the touch panel or near the touch panel by using any appropriate object or accessory such as a finger or a stylus), and driving a corresponding connected apparatus according to a preset program. Optionally, the touch panel may include two parts: a touch detection apparatus and a touch controller. The touch detection apparatus detects a touch orientation of the user, detects a signal brought by the touch operation, and transmits the signal to the touch controller. The touch controller receives touch information from the touch detection apparatus, converts the touch information into contact coordinates, sends the contact coordinates to the processor, and can receive and execute a command sent by the processor. In addition, the touch panel may be implemented in multiple types such as a resistive type, a capacitive type, an infrared type, and a surface acoustic wave type. In addition to the touch panel, the input unit may further include the another input device. Specifically, the another input device may include but is not limited to one or more of a physical keyboard, a function key (such as a volume control key or a power on/off key), a track ball, a mouse, or a joystick.

The display unit 140 may be configured to display information inputted by a user or information provided for a user and various menus of a device. The display unit 140 may include a display panel. Optionally, the display panel may be configured in a form of a liquid crystal display (Liquid Crystal Display, "LCD" for short), an organic light-emitting diode (Organic Light-Emitting Diode, "OLED" for short), or the like. Further, the touch panel may cover the display panel. After detecting the touch operation on or near the touch panel, the touch panel transmits information about the touch operation to the processor to determine a type of a touch event. Then the processor 170 provides a corresponding visual output on the display panel according to the type of the touch event. In FIG. 3, the touch panel and the display panel serve as two independent components to implement input and output functions of the smartphone 100. However, in some embodiments, the touch panel and the display panel may be integrated to implement the input and output functions of the smartphone 100.

The audio frequency circuit 150, a speaker, and a microphone may provide an audio interface between the user and the smartphone 100. The audio frequency circuit 150 may transmit, to the speaker, an electrical signal that is converted from received audio data. The speaker converts the electrical signal into an acoustical signal and outputs the acoustical signal. In another aspect, the microphone converts a collected acoustical signal into an electrical signal. The audio frequency circuit 150 receives the electrical signal, converts the electrical signal into audio data, and outputs the audio data to the memory 170 for further processing.

The Bluetooth module 160 is a basic chip circuit set integrated with a Bluetooth function. The Bluetooth module 160 can perform wireless transmission according to a Bluetooth protocol.

The processor 170 is a control center of the smartphone 100, connects various components of the entire smartphone 100 by using various interfaces and lines, and implements, by running or executing the software program and/or the module stored in the memory and invoking data stored in the memory 120, various functions of the smartphone 100 and data processing, so as to perform overall monitoring on the smartphone 100. Optionally, the processor 170 may include one or more processing units. Preferably, the processor 170 may integrate an application processor and a modem processor. The application processor mainly processes an operating system, a user interface, an application, and the like. The modem processor mainly processes wireless communication. It may be understood that the modem processor may not be integrated in the processor 170.

The power supply 180 (such as a battery) supplies power to each component. Preferably, the power supply may be logically connected to the processor by using a power supply management system, so as to implement, by using the power supply management system, functions such as management on charging, discharging, and power consumption.

The following describes a Bluetooth connection management method in an embodiment of the present invention with reference to an example in which a Bluetooth connection is established between a Bluetooth sound box and a smartphone A and a smartphone B that have the structure of the smartphone 100 in FIG. 3. As shown in FIG. 4, the method 1000 includes the following steps.

S1100. A processor 170 of a smartphone A determines whether the smartphone A performs data transmission with a Bluetooth sound box by using a Bluetooth connection.

Specifically, after the smartphone A establishes the Bluetooth connection to the Bluetooth sound box by using a Bluetooth module 160, the processor 170 of the smartphone A determines whether the smartphone A performs data transmission with the Bluetooth sound box by using the Bluetooth connection. For example, the data transmission is transmission of information such as music, a document, or a video.

The processor 170 of the smartphone A determines, according to a working power of the Bluetooth module 160 of the smartphone A, whether the smartphone A performs data transmission with the Bluetooth sound box by using the Bluetooth connection. The working power of the Bluetooth module 160 of the smartphone A may be a transmit power and/or a receive power.

For example, when the processor 170 of the smartphone A determines whether the smartphone A performs data transmission with the Bluetooth sound box by using the Bluetooth connection, a time point for detecting the working power of the Bluetooth module 160 of the smartphone A may be preset. The processor 170 of the smartphone A detects the working power of the Bluetooth module 160 of the smartphone A at each preset time point. When the processor 170 of the smartphone A detects, at a time point, that the working power of the Bluetooth module 160 of the smartphone A is less than a preset power threshold, the processor 170 of the smartphone A determines that the smartphone A performs no data transmission with the Bluetooth sound box. Specifically, the processor of the smartphone A may periodically detect the working power of the Bluetooth module 160 of the smartphone A.

Alternatively, the processor 170 of the smartphone A detects the working power of the Bluetooth module 160 of the smartphone A in real time; starts timing when detecting that the working power of the Bluetooth module 160 of the smartphone A is less than the preset power threshold; and when the processor 170 of the smartphone A detects that duration in which the working power of the Bluetooth module 160 of the smartphone A is less than the preset power threshold exceeds preset duration, determines that the smartphone A performs no data transmission with the Bluetooth sound box by using the Bluetooth connection; or when the processor 170 of the smartphone A detects that the working power of the Bluetooth module 160 is not less than the preset power threshold, or when duration in which the working power of the Bluetooth module 160 is less than the preset power threshold does not exceed preset duration, determines that the smartphone A performs data transmission with the Bluetooth sound box.

Alternatively, the processor 170 of the smartphone A may collect statistics on a sum of working powers of the Bluetooth module 160 of the smartphone A in preset duration; and determine, according to a magnitude relationship between the sum of the working powers and a preset power threshold, whether the smartphone A performs data transmission with the Bluetooth sound box by using the Bluetooth connection. The preset power threshold compared with the sum of the working powers and the preset power threshold mentioned in the foregoing paragraph may be set to different values.

Optionally, the processor 170 of the smartphone A determines, according to a magnitude relationship between the working power of the Bluetooth module 160 of the smartphone A in a period of time and the preset power threshold, whether the smartphone A performs data transmission with the Bluetooth sound box by using the Bluetooth connection. P is the working power of the Bluetooth module 160 of the smartphone A, and P may be represented by a formula (1):

$$P = \sum_{t=0}^{N} x^2 \qquad (1)$$

In the formula (1), x is a Bluetooth signal sent or received by the Bluetooth module 160 of the smartphone A (mainly a sent signal for the Bluetooth sound box). X may be represented by a function with variables of a time and an angular frequency: $X = A(t)e^{(j\omega t+\varphi)}$, where $A(t)$ indicates an amplitude of the Bluetooth signal; $\omega = 2\pi f$ indicates the angular frequency, and $f$ indicates a frequency for transmitting the Bluetooth signal; and $\varphi$ indicates an initial phase of the Bluetooth signal. $X^2$ indicates a power. $t$ indicates the time. N indicates a time length, and a value of N may be set according to an actual requirement.

Optionally, the working power of the Bluetooth module 160 may be obtained from a power supply management module of the smartphone A.

Specifically, the processor 170 of the smartphone A may start to record the working power of the Bluetooth module 160 of the smartphone A from any time point. After collecting statistics on a sum of working powers of the Bluetooth module 160 of the smartphone A in a period of time, the processor 170 of the smartphone A compares the sum of the working powers with the preset power threshold $P_{threshold}$. If P is less than $P_{threshold}$, it is determined that the smartphone A performs no data transmission with the Bluetooth sound box by using the Bluetooth connection, and the Bluetooth connection to the Bluetooth sound box needs to be broken. If P is greater than or equal to $P_{threshold}$, it is determined that the smartphone A performs data transmission with the Bluetooth sound box by using the Bluetooth connection, and the Bluetooth connection between the smartphone A and the Bluetooth sound box does not need to be broken.

Optionally, for example, the processor 170 of the smartphone A may determine, according to a status of an application (Application, "APP" for short) corresponding to the Bluetooth sound box, whether the smartphone A performs data transmission with the Bluetooth sound box by using the Bluetooth connection. When the processor 170 of the smartphone A determines that the APP corresponding to the Bluetooth sound box is in an enabled state, it is determined that the smartphone A performs data transmission with the Bluetooth sound box by using the Bluetooth connection. When the processor 170 of the smartphone A determines that the APP corresponding to the Bluetooth sound box is in a disabled state, it is determined that the smartphone A performs no data transmission with the Bluetooth sound box by using the Bluetooth connection.

S 1200. The smartphone A breaks the Bluetooth connection to the Bluetooth sound box when the smartphone A determines that no data is being transmitted with the Bluetooth sound box by using the Bluetooth connection.

In this embodiment, the smartphone A can detect a usage status of the Bluetooth connection, that is, whether data is being transmitted by using the Bluetooth connection, so as to control the Bluetooth connection to the Bluetooth sound box. When it is determined that no data is being transmitted by using the Bluetooth connection, the connection to the Bluetooth sound box is broken. In this way, another smartphone may establish a Bluetooth connection to the Bluetooth sound box.

Further, after the smartphone A breaks the Bluetooth connection to the Bluetooth sound box, a Bluetooth function of the smartphone A may be disabled, and a user is prompted that the Bluetooth function is disabled. In this way, power consumption of the mobile phone can be reduced.

Optionally, for example, after the smartphone A determines that no data is being transmitted with the Bluetooth sound box and before the smartphone A breaks the Bluetooth connection to the Bluetooth sound box, the smartphone A instructs, by using the Bluetooth connection, the Bluetooth sound box to enter a pairing state or a to-be-connected state. In the prior art, after a Bluetooth connection of a master Bluetooth device is manually broken by a user, a corresponding slave Bluetooth device still cannot establish a connection to another master Bluetooth device. The user needs to manually restart the slave Bluetooth device, so that the slave Bluetooth device can establish a connection to another master Bluetooth device. In this example, before breaking the Bluetooth connection to the Bluetooth sound box, the smartphone A instructs the Bluetooth sound box to enter the pairing state or the to-be-connected state. The Bluetooth sound box switches a status after receiving an instruction. In this way, another smartphone may connect to the Bluetooth sound box.

Optionally, for example, the processor 170 of the smartphone A detects a status of a Bluetooth switch icon of the smartphone A; and when the Bluetooth switch icon is off, instructs the Bluetooth sound box to enter the to-be-connected state or the pairing state, and breaks the Bluetooth connection between the smartphone A and the Bluetooth sound box.

When a slave Bluetooth device is in the to-be-connected state, the slave Bluetooth device may be found by a master Bluetooth device that was paired with the slave Bluetooth device, and a Bluetooth connection is established.

When a slave Bluetooth device is in the pairing state, the slave Bluetooth device may be found by a master Bluetooth device that has not been paired with the slave Bluetooth device, and pairing is performed by means of key pairing, to establish a Bluetooth connection.

For example, as shown in FIG. 4, it is assumed that both the smartphone A and a smartphone B were paired with the Bluetooth sound box, the smartphone A instructs the Bluetooth sound box to enter the to-be-connected state, the Bluetooth connection between the smartphone A and the Bluetooth sound box is broken, and the Bluetooth sound box enters the to-be-connected state. After a Bluetooth function of the smartphone B is enabled, a Bluetooth module 160 of the smartphone B searches for a device. When finding the Bluetooth sound box, the smartphone B automatically establishes a connection to the Bluetooth sound box. The instructing, by the smartphone A, the Bluetooth sound box to enter the to-be-connected state may be implemented by instructing the Bluetooth sound box to shut down and then start.

It is assumed that the smartphone B in FIG. 4 has not been paired with the Bluetooth sound box, the smartphone A instructs the Bluetooth sound box to enter the pairing state, the Bluetooth connection between the smartphone A and the Bluetooth sound box is broken, and the Bluetooth sound box enters the pairing state. After a Bluetooth function of the smartphone B is enabled, a Bluetooth module 160 of the smartphone B searches for a device. When finding the Bluetooth sound box, the smartphone B needs to complete pairing and connection between the smartphone B and the Bluetooth sound box by using a pairing password. After the intelligent terminal B and the Bluetooth sound box are paired and connected, the Bluetooth sound box stores information about the intelligent terminal B. Next time the intelligent terminal B finds the Bluetooth sound box, the intelligent terminal B may directly establish a Bluetooth connection to the Bluetooth sound box.

Optionally, for example, in FIG. 4, it is assumed that smartphones B to D all expect to establish a connection to the Bluetooth sound box after the smartphone A breaks the Bluetooth connection to the Bluetooth sound box. If only the smartphone B of the smartphones B to D was paired with the Bluetooth sound box, the Bluetooth sound box establishes a Bluetooth connection to the smartphone B. If the smartphones B to D were all paired with the Bluetooth sound box, according to a preset priority sequence, the smartphone D with the highest priority may be paired with the Bluetooth sound box to establish a Bluetooth connection.

In the prior art, when a user needs to use a Bluetooth sound box, the user needs to manually turn on a Bluetooth switch of a smartphone A, search for a Bluetooth device around, and manually select the Bluetooth sound box to trigger a Bluetooth connection between the smartphone A and the Bluetooth sound box. When the user does not need to use the Bluetooth sound box, the user needs to manually break the Bluetooth connection or disable a Bluetooth function. The foregoing is implemented manually by the user, thereby affecting user experience of the user. On such a basis, a method for automatically enabling and disabling the Bluetooth function of the smartphone A may be provided, to simplify a user operation and improve user experience of the user.

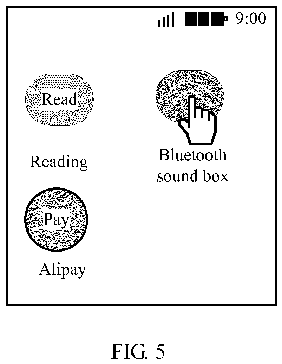

With reference to a specific embodiment, the following describes a method for automatically enabling and disabling a Bluetooth function of a smartphone A according to an embodiment of the present invention. An example in which an APP corresponding to a Bluetooth sound box is installed on the smartphone A is used. In a process of installing the APP corresponding to the Bluetooth sound box on the smartphone A, a memory 120 of the smartphone A records attributes related to the APP corresponding to the Bluetooth sound box. These related attributes may include whether the APP needs to use the Bluetooth function, whether the APP has a permission to enable the Bluetooth function of the smartphone A, and the like; and may further include a Bluetooth device type, such as a Bluetooth headset, a Bluetooth sound box, or a Bluetooth band, that is corresponding to the APP corresponding to the Bluetooth sound box. In addition, after the APP is installed, an icon corresponding to the APP is displayed on a display unit 140 of the smartphone A, to facilitate an operation of a user. For example, on a user interface of the smartphone A in FIG. 5, the icon corresponding to the APP is "Bluetooth sound box", and the APP corresponding to the Bluetooth sound box is referred to as a "Bluetooth sound box APP" in the following.

In this embodiment of the present invention, the memory 120 of the smartphone A may store a correspondence between an on/off status of the Bluetooth sound box APP and a required status of the Bluetooth function. Table 1 describes a possible correspondence between the on/off status of the Bluetooth sound box APP and the required status of the Bluetooth function.

**Table 1**

| Bluetooth sound box APP | Bluetooth function |
|---|---|
| On | On |
| Off | Off |

A processor 170 of the smartphone A detects an enabling status of the Bluetooth APP, to determine the on/off status of the Bluetooth function. When detecting that the Bluetooth sound box APP switches from disabled to enabled, the smartphone A determines a current status of the Bluetooth function, and determines whether the current status of the Bluetooth function is consistent with the required status of the Bluetooth function. If the current status of the Bluetooth function is disabled, and the status of the Bluetooth function that is required for enabling the Bluetooth sound box APP is enabled, that is, the two statuses are inconsistent, the current status of the Bluetooth function is switched to the required status of the Bluetooth function, that is, the current status of the Bluetooth function is switched to enabled. If the two statuses are consistent, the current status of the Bluetooth function is retained. Correspondingly, when detecting that the Bluetooth sound box APP switches from enabled to disabled, the smartphone A determines whether the current status of the Bluetooth function is disabled. If the current status of the Bluetooth function is disabled, the disabled state is retained. If the current status of the Bluetooth function is not disabled, the smartphone A disables the Bluetooth function. The memory 120 of the smartphone A may store information about the Bluetooth sound box corresponding to the Bluetooth sound box APP. When the Bluetooth sound box APP changes to the enabled state and the Bluetooth function is in the enabled state, the smartphone A searches for a Bluetooth device around. When finding the Bluetooth sound box, the smartphone A automatically establishes a Bluetooth connection to the Bluetooth sound box.

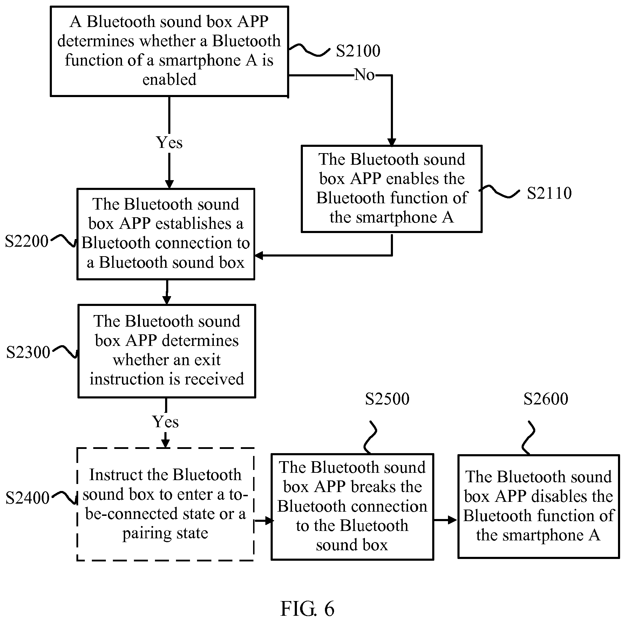

FIG. 6 shows a Bluetooth connection management method according to another embodiment of the present invention. As shown in FIG. 6, the method 2000 includes the following steps.

S2100. When a Bluetooth sound box APP is enabled, the Bluetooth sound box APP determines whether a Bluetooth function of a smartphone A is enabled.

A user enables the Bluetooth sound box APP by tapping a "Bluetooth sound box" icon (as shown in FIG. 5) on a display unit 140 of the smartphone A. The smartphone A runs the Bluetooth sound box APP.

Specifically, the Bluetooth sound box APP determines, by detecting a status of a Bluetooth module 160 of the smartphone A, whether the Bluetooth function of the smartphone A is enabled. Alternatively, the Bluetooth sound box APP determines, by reading a status of a Bluetooth switch icon, whether the Bluetooth function of the smartphone A is enabled.

If the Bluetooth function of the smartphone A is enabled, S2200 is directly performed. Otherwise, when the Bluetooth sound box APP determines that the Bluetooth function of the smartphone A is not enabled, step 2110 is performed: The Bluetooth sound box APP enables the Bluetooth function of the smartphone A by sending, to the Bluetooth module 160 of the smartphone A, an instruction for enabling the Bluetooth function of the smartphone A. Then S2200 is performed.

S2200. The Bluetooth sound box APP establishes a Bluetooth connection to a Bluetooth sound box.

If the Bluetooth sound box APP was paired with the Bluetooth sound box, a memory 120 of the smartphone A records pairing information of the Bluetooth sound box APP and the Bluetooth sound box. After the Bluetooth function of the smartphone A is enabled, the Bluetooth sound box APP searches for the Bluetooth sound box; and when finding the Bluetooth sound box, automatically establishes the Bluetooth connection to the Bluetooth sound box.

If the Bluetooth sound box APP has not been paired with the Bluetooth sound box, after the Bluetooth function of the smartphone A is enabled, the Bluetooth sound box APP scans a Bluetooth device around, and is automatically paired with the Bluetooth sound box according to a Bluetooth device type corresponding to the Bluetooth sound box APP. After pairing, the memory 120 of the smartphone A stores identification information of the Bluetooth sound box, function information of the Bluetooth sound box, and the like. After the Bluetooth sound box APP is enabled again, the Bluetooth sound box APP automatically searches for the Bluetooth sound box corresponding to the identification information, and automatically establishes the Bluetooth connection to the Bluetooth sound box.

Optionally, if the Bluetooth sound box APP has not been paired with the Bluetooth sound box, after the Bluetooth function of the smartphone A is enabled, the smartphone A may enter a Bluetooth setting screen, and a Bluetooth device around is displayed. The user may manually select the Bluetooth sound box for pairing.

S2300. The Bluetooth sound box APP determines whether an exit instruction is received.

The user may enable, by operating the Bluetooth sound box APP, the Bluetooth sound box APP to exit, or enable, by using mobile phone application management software, the Bluetooth sound box APP to exit.

S2400. When receiving the exit instruction, the Bluetooth sound box APP instructs the Bluetooth sound box to enter a to-be-connected state or a pairing state.

S2400 is an optional step. S2500 may be directly performed after step S2300.

It may be understood that, after the Bluetooth sound box enters the to-be-connected state or the pairing state, provided that a Bluetooth sound box APP on a smartphone B expects to establish a Bluetooth connection to the Bluetooth sound box, the Bluetooth sound box APP on the smartphone B may automatically establish a connection to the Bluetooth sound box if the Bluetooth sound box APP on the smartphone B was paired with the Bluetooth sound box. Otherwise, the Bluetooth sound box APP on the smartphone B establishes a Bluetooth connection to the Bluetooth sound box by means of key pairing.

S2500. The Bluetooth sound box APP breaks the Bluetooth connection to the Bluetooth sound box.

It should be noted that the breaking, by the Bluetooth sound box APP, the Bluetooth connection to the Bluetooth sound box means breaking a physical layer connection between the Bluetooth module of the smartphone A and the Bluetooth sound box, that is, disconnecting, by the Bluetooth sound box APP, a data transmission channel between the smartphone A and the Bluetooth sound box.

S2600. The Bluetooth sound box APP disables the Bluetooth function of the smartphone A.

Specifically, the Bluetooth sound box APP instructs the Bluetooth module 160 of the smartphone A to disable the Bluetooth function of the smartphone A, to reduce power consumption of the smartphone A.

Optionally, before S2600, the Bluetooth sound box APP may determine whether the Bluetooth function of the smartphone A is enabled when the Bluetooth sound box APP is enabled. If the Bluetooth function of the smartphone A is enabled, S2600 is not performed. If the Bluetooth function of the smartphone A is not enabled, S2600 is performed. Therefore, after the Bluetooth sound box APP is disabled, the Bluetooth function of the smartphone A is restored to a status that is before the Bluetooth sound box APP is enabled.

In this embodiment, the Bluetooth sound box APP may be provided by a Bluetooth sound box vendor.

The Bluetooth sound box APP has program code corresponding to the foregoing steps. The steps in this embodiment may be performed by a processor 170 of the smartphone A by running the Bluetooth sound box APP.

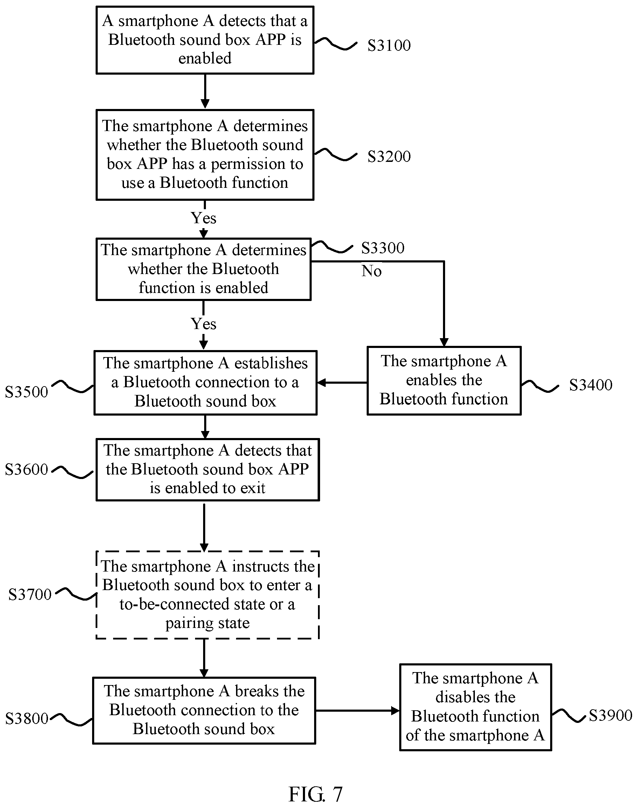

With reference to another specific embodiment, the following describes a method for automatically enabling and disabling a Bluetooth function of a smartphone A according to an embodiment of the present invention. An example in which an APP corresponding to a Bluetooth sound box is installed on the smartphone A is used. After the APP is installed, an icon corresponding to the APP is displayed on a display unit 140 of the smartphone A, to facilitate an operation of a user. For example, on a user interface of the smartphone A in FIG. 5, the icon corresponding to the APP is "Bluetooth sound box", and the APP corresponding to the Bluetooth sound box is referred to as a "Bluetooth sound box APP" in the following. FIG. 7 shows a Bluetooth connection management method according to still another embodiment of the present invention. As shown in FIG. 7, the method 3000 includes the following steps.

S3100. A smartphone A detects that a Bluetooth sound box APP is enabled.

A user enables the Bluetooth sound box APP by tapping a "Bluetooth sound box" icon (as shown in FIG. 5) on a display unit 140 of the smartphone A.

S3200. The smartphone A determines, according to an attribute of the Bluetooth sound box APP, whether the Bluetooth sound box APP has a permission to use a Bluetooth function; and performs step S3300 when determining that the Bluetooth sound box APP has the permission to use the Bluetooth function. Optionally, the smartphone A may skip S3200 and perform S3300 after performing S3100.

Specifically, the attribute of the Bluetooth sound box APP may be recorded, during installation, to a default setting in a memory 120 of the smartphone A, or may be set by the user when the Bluetooth sound box APP previously runs. The attribute of the Bluetooth sound box APP may include whether the Bluetooth sound box APP has the permission to use the Bluetooth function, identification information of a Bluetooth sound box bound to the Bluetooth sound box APP, and the like.

S3300. The smartphone A determines whether the Bluetooth function is enabled; and performs S3500 if the Bluetooth function is enabled, or performs S3400 if the Bluetooth function is not enabled.

S3400. The smartphone A enables the Bluetooth function.

S3500. The smartphone A establishes a Bluetooth connection to a Bluetooth sound box.

If the Bluetooth sound box APP was paired with the Bluetooth sound box, the memory 120 of the smartphone A records pairing information of the Bluetooth sound box APP and the Bluetooth sound box. After the Bluetooth function of the smartphone A is enabled, the smartphone A searches for the Bluetooth sound box that was paired; and when finding the Bluetooth sound box, automatically establishes the Bluetooth connection to the Bluetooth sound box.

If the Bluetooth sound box APP has not been paired with the Bluetooth sound box, after the Bluetooth function of the smartphone A is enabled, the Bluetooth sound box APP needs to be first paired with the Bluetooth sound box. The user inputs a pairing password by using an input unit 130 of the smartphone A, to implement pairing of the Bluetooth sound box APP and the Bluetooth sound box. After pairing, the memory 120 of the smartphone A stores identification information of the Bluetooth sound box, function information of the Bluetooth sound box, and the like. After the Bluetooth sound box APP is enabled again, the smartphone A automatically searches for the Bluetooth sound box and automatically establishes the Bluetooth connection to the Bluetooth sound box.

S3600. The smartphone A detects that the Bluetooth sound box APP exits.

The user may enable, by operating the Bluetooth sound box APP, the Bluetooth sound box APP to exit, or enable, by using mobile phone application management software, the Bluetooth sound box APP to exit.

S3700. The smartphone A instructs, by using the Bluetooth connection, the Bluetooth sound box to enter a to-be-connected state or a pairing state.

It may be understood that, after the Bluetooth sound box enters the to-be-connected state or the pairing state, provided that a Bluetooth sound box APP on a smartphone B expects to establish a Bluetooth connection to the Bluetooth sound box, the Bluetooth sound box APP on the smartphone B may automatically establish a connection to the Bluetooth sound box if the Bluetooth sound box APP on the smartphone B was paired with the Bluetooth sound box. Otherwise, the Bluetooth sound box APP on the smartphone B establishes a Bluetooth connection to the Bluetooth sound box by means of key pairing.

S3700 is an optional step. S3800 may be directly performed after step S3600.

S3800. The smartphone A breaks the Bluetooth connection to the Bluetooth sound box.

It should be noted that the breaking, by the smartphone A, the Bluetooth connection to the Bluetooth sound box means breaking a physical layer connection between a Bluetooth module of the smartphone A and the Bluetooth sound box, that is, disconnecting, by the Bluetooth sound box APP, a data transmission channel between the smartphone A and the Bluetooth sound box.

S3900. The smartphone A disables the Bluetooth function of the smartphone A.

Specifically, the smartphone A disables the Bluetooth function of the smartphone A, to reduce power consumption of the smartphone A.

Optionally, before S3900, the smartphone A may determine whether the Bluetooth function of the smartphone A is enabled when the Bluetooth sound box APP is enabled. If the Bluetooth function of the smartphone A is enabled, S3900 is not performed. If the Bluetooth function of the smartphone A is not enabled, S3900 is performed. Therefore, after the Bluetooth sound box APP is disabled, the Bluetooth function of the smartphone A is restored to a status that is before the Bluetooth sound box APP is enabled.

In this embodiment, program code for performing the foregoing steps by the smartphone A may be independent of code of the Bluetooth sound box APP, that is, may be another application, such as a mobile phone management application.

The embodiment in FIG. 4 may be combined with the embodiments in FIG. 6 and FIG. 7. That is, when the Bluetooth sound box APP runs, the smartphone A detects whether data is being transmitted with the Bluetooth sound box, and if no data is being transmitted, automatically breaks the Bluetooth connection to the Bluetooth sound box.

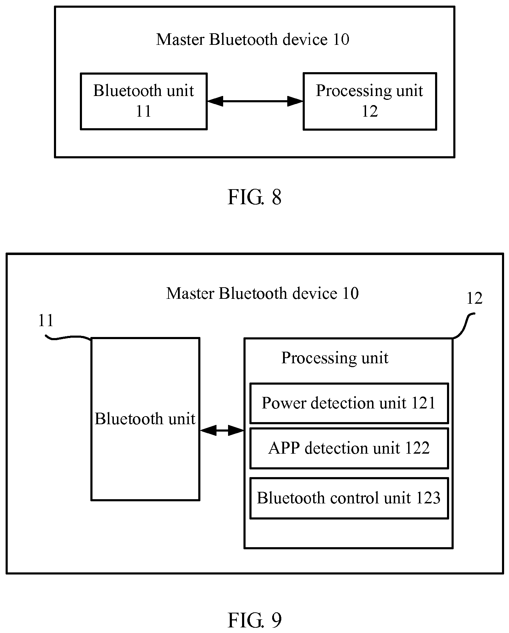

The foregoing describes, in detail, the Bluetooth connection management method in the embodiments of the present invention with reference to FIG. 2 to FIG. 7. The following describes a master Bluetooth device according to an embodiment of the present invention with reference to FIG. 8. As shown in FIG. 8, the master Bluetooth device 10 includes:

a Bluetooth unit 11, configured to: establish a Bluetooth connection between the master Bluetooth device and the slave Bluetooth device, perform data transmission with the slave Bluetooth device by using the Bluetooth connection, and break the Bluetooth connection between the master Bluetooth device and the slave Bluetooth device; and

a processing unit 12, configured to: determine whether the master Bluetooth device performs data transmission with the slave Bluetooth device by using the Bluetooth connection; and when it is determined that the master Bluetooth device performs no data transmission with the slave Bluetooth device by using the Bluetooth connection, instruct the Bluetooth unit 11 to break the Bluetooth connection between the master Bluetooth device and the slave Bluetooth device.

Therefore, according to this embodiment of the present invention, the master Bluetooth device breaks the Bluetooth connection to the slave Bluetooth device when the master Bluetooth device determines that no data is being transmitted with the slave Bluetooth device by using the Bluetooth connection. A user does not need to manually break the Bluetooth connection. So that another master Bluetooth device may connect to the slave Bluetooth device. This avoids a waste of resources.

In this embodiment of the present invention, as shown in FIG. 9, the processing unit 12 includes a power detection unit 121. The power detection unit 121 is configured to determine, according to a working power of the Bluetooth unit 11, whether the master Bluetooth device performs data transmission with the slave Bluetooth device by using the Bluetooth connection.

In this embodiment of the present invention, optionally, the power detection unit 121 is specifically configured to: collect statistics on a sum of working powers of the Bluetooth unit in preset duration; and when it is determined that the sum of the working powers is less than a preset power threshold, determine that the master Bluetooth device performs no data transmission with the slave Bluetooth device by using the Bluetooth connection; or when it is determined that the sum of the working powers is greater than or equal to the preset power threshold, determine that the master Bluetooth device performs data transmission with the slave Bluetooth device by using the Bluetooth connection.

In this embodiment of the present invention, optionally, the power detection unit 121 is specifically configured to: start timing when it is detected that the working power of the Bluetooth unit 11 is less than a preset power threshold; and when it is detected that duration in which the working power of the Bluetooth unit 11 is less than the preset power threshold exceeds preset duration, determine that the master Bluetooth device performs no data transmission with the slave Bluetooth device by using the Bluetooth connection; or when it is detected that the working power of the Bluetooth unit 11 is greater than or equal to the preset power threshold, or when it is detected that duration in which the working power of the Bluetooth unit 11 is less than the preset power threshold does not exceed the preset duration, determine that the master Bluetooth device performs data transmission with the slave Bluetooth device by using the Bluetooth connection.

In this embodiment of the present invention, optionally, as shown in FIG. 9, the processing unit 12 further includes an application APP detection unit 122. The APP detection unit 122 is configured to: determine, according to a status of an APP that uses the Bluetooth connection, whether the master Bluetooth device performs data transmission with the slave Bluetooth device by using the Bluetooth connection; and when it is determined that the APP exits, determine that the terminal device performs no data transmission with the slave Bluetooth device by using the Bluetooth connection; or when it is determined that the APP is running, determine that the terminal device performs data transmission with the slave Bluetooth device by using the Bluetooth connection.

In this embodiment of the present invention, optionally, before breaking the Bluetooth connection between the master Bluetooth device and the slave Bluetooth device, the Bluetooth unit 11 is further configured to instruct the slave Bluetooth device to enter a pairing state or a to-be-connected state.

In this embodiment of the present invention, optionally, as shown in FIG. 9, the processing unit 12 further includes a Bluetooth control unit 123, configured to disable a Bluetooth function of the master Bluetooth device after the Bluetooth unit 11 breaks the Bluetooth connection between the master Bluetooth device and the slave Bluetooth device.

It should be understood that the master Bluetooth device 10 herein is implemented in a form of a functional unit. The term "unit" herein may be an application-specific integrated circuit (Application Specific Integrated Circuit, "ASIC" for short), an electronic circuit, a processor (such as a shared processor, a dedicated processor, or a bank processor) configured to execute one or more software or firmware programs, a memory, a combined logic circuit, and/or another appropriate component that supports the described functions. In an optional example, a person skilled in the art may understand that the master Bluetooth device 10 may be configured to perform the related processes and/or steps in the method 1000 in the foregoing method embodiment. To avoid repetition, details are not described herein.

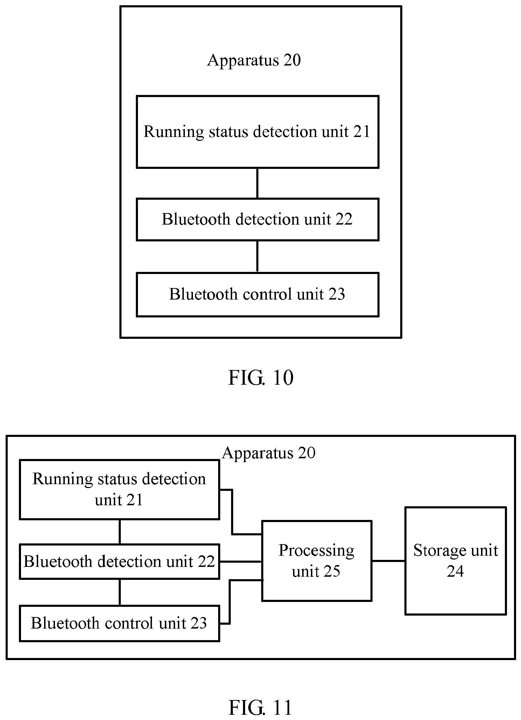

FIG. 10 shows an apparatus according to an embodiment of the present invention. The apparatus is integrated in a master Bluetooth device and is configured to execute a function related to a slave Bluetooth device. As shown in FIG. 10, the apparatus 20 includes: a running status detection unit 21, a Bluetooth detection unit 22, and a Bluetooth control unit 23.

The running status detection unit 21 is configured to detect a running status of the apparatus.

The Bluetooth detection unit 22 is configured to: when the running status detected by the running status detection unit 21 changes from a first state to a second state, determine a current status of a Bluetooth function of the master Bluetooth device. Each of the first state and the second state is one of an enabled state or a disabled state. The first state is different from the second state.

The Bluetooth control unit 23 is configured to: when the Bluetooth detection unit 22 determines that the current status of the Bluetooth function is different from a status that is of the Bluetooth function and that the second state needs to correspond to, switch the status of the Bluetooth function to the status that is of the Bluetooth function and that the second state needs to correspond to.

Therefore, according to this embodiment of the present invention, the apparatus can automatically enable or disable the Bluetooth function of the master Bluetooth device according to a requirement, for the status of the Bluetooth function, of the running status of the apparatus. Therefore, power consumption of the master Bluetooth device can be reduced, inconvenience brought by manually enabling and disabling the Bluetooth function by a user is avoided, and user experience is improved.

In this embodiment of the present invention, optionally, as shown in FIG. 11, the apparatus further includes:

a storage unit 24, configured to store information about the slave Bluetooth device, where the slave Bluetooth device may be a preset slave Bluetooth device corresponding to a Bluetooth unit 11, or a slave Bluetooth device that was paired with the master Bluetooth device; and

a processing unit 25, configured to: when the second state is the enabled state and the status of the Bluetooth function is the enabled state, enable the master Bluetooth device to automatically establish a Bluetooth connection to the slave Bluetooth device.

It may be understood that, herein, that the status of the Bluetooth function is the enabled state means that the Bluetooth function is actually in the enable state, rather than that a required status of the Bluetooth function is the enabled state. It may be understood that, for a slave Bluetooth device that has not been paired, a pairing operation is further performed before the master Bluetooth device automatically establishes the Bluetooth connection to the slave Bluetooth device.

It should be understood that, according to this embodiment of the present invention, the apparatus 20 may be corresponding to the Bluetooth sound box APP in the method 2000 in the embodiment of the present invention. In addition, the units, that is, modules, in the apparatus 20 and the foregoing other operations and/or functions are used to implement corresponding processes in the method 2000. For brevity, details are not described herein again.

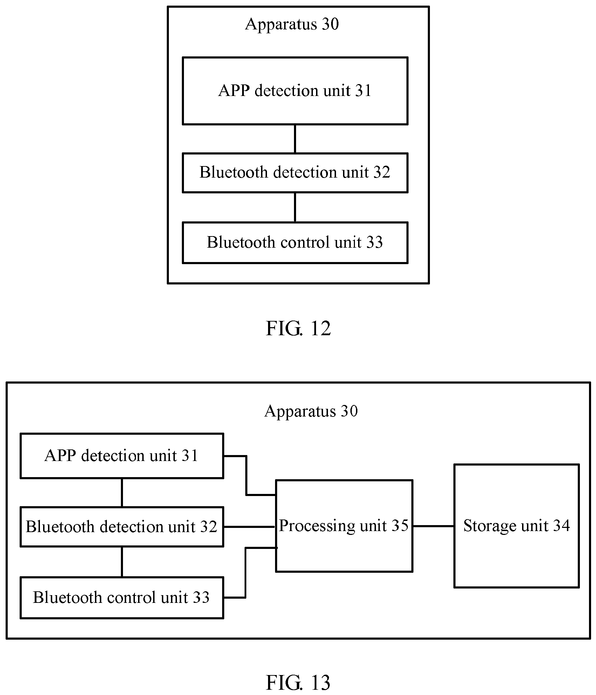

FIG. 12 shows an apparatus according to another embodiment of the present invention. The apparatus is integrated in a master Bluetooth device. An application APP corresponding to a slave Bluetooth device is installed on the master Bluetooth device. As shown in FIG. 12, the apparatus 30 includes: an APP detection unit 31, a Bluetooth detection unit 32, and a Bluetooth control unit 33.

The APP detection unit 31 is configured to detect a running status of the APP.

The Bluetooth detection unit 32 is configured to: when the APP detection unit 31 detects that the running status of the APP changes from a first state to a second state, determine a current status of a Bluetooth function of the master Bluetooth device. Each of the first state and the second state is one of an enabled state or a disabled state. The first state is different from the second state.

The Bluetooth control unit 33 is configured to: when the Bluetooth detection unit 32 determines that the current status of the Bluetooth function is different from a status that is of the Bluetooth function and that the second state needs to correspond to, switch the status of the Bluetooth function to the status that is of the Bluetooth function and that the second state needs to correspond to.

Therefore, according to this embodiment of the present invention, the apparatus can automatically enable or disable the Bluetooth function of the master Bluetooth device according to the running status of the APP installed on the master Bluetooth device and according to a requirement, for the status of the Bluetooth function, of the running status of the APP. Therefore, power consumption of the master Bluetooth device can be reduced, inconvenience brought by manually enabling and disabling the Bluetooth function by a user is avoided, and user experience is improved.

In this embodiment of the present invention, optionally, as shown in FIG. 13, the apparatus further includes:

> a storage unit 34, configured to store information about the slave Bluetooth device; and
> a processing unit 35, configured to: when the APP changes to the enabled state and the status of the Bluetooth function is the enabled state, enable the APP to automatically establish a Bluetooth connection to the slave Bluetooth device.

It should be understood that, according to this embodiment of the present invention, the units, that is, modules, in the apparatus 30 and the foregoing other operations and/or functions are used to implement corresponding processes in the method 3000. For brevity, details are not described herein again.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in an actual implementation. For example, a plurality of units or components may be combined or integrated into another system, or some features may be ignored or not performed. In addition, the shown or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separated, and parts shown as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1.  A Bluetooth connection management method, wherein the method is applied to a scenario in which a master Bluetooth device has established a Bluetooth connection to a slave Bluetooth device, the slave Bluetooth device being a sound box or headset configured to receive a data transmission comprising audio data, and the method comprises:

    > determining (S 1100), by the master Bluetooth device, whether data is being transmitted with the slave Bluetooth device by using the Bluetooth connection; and
    > breaking (S1200), by the master Bluetooth device, the Bluetooth connection to the slave Bluetooth device when the master Bluetooth device determines that no data is being transmitted with the slave Bluetooth device by using the Bluetooth connection,
    > wherein the determining, by the master Bluetooth device, whether data is being transmitted with the slave Bluetooth device by using the Bluetooth connection comprises:
    > determining, by the master Bluetooth device according to a working power of a Bluetooth module in the master Bluetooth device, whether data is being transmitted with the slave Bluetooth device by using the Bluetooth connection.

2.  The method according to claim 1, wherein the determining (S 1100), by the master Bluetooth device according to a working power of a Bluetooth module in the master Bluetooth device, whether data is being transmitted with the slave Bluetooth device by using the Bluetooth connection comprises:

collecting statistics on, by the master Bluetooth device, a sum of working powers of the Bluetooth module in preset duration; and
when the master Bluetooth device determines that the sum of the working powers is less than a preset power threshold, determining, by the master Bluetooth device, that no data is being transmitted with the slave Bluetooth device by using the Bluetooth connection; or when the master Bluetooth device determines that the sum of the working powers is greater than or equal to a preset power threshold, determining, by the master Bluetooth device, that data is being transmitted with the slave Bluetooth device by using the Bluetooth connection.

3. The method according to claim 1, wherein the determining (S 1100), by the master Bluetooth device according to a working power of a Bluetooth module in the master Bluetooth device, whether data is being transmitted with the slave Bluetooth device by using the Bluetooth connection comprises:

starting timing when the master Bluetooth device detects that the working power of the Bluetooth module is less than a preset power threshold; and
when the master Bluetooth device detects that duration in which the working power of the Bluetooth module is less than the preset power threshold exceeds preset duration, determining, by the master Bluetooth device, that no data is being transmitted with the slave Bluetooth device by using the Bluetooth connection; or when the master Bluetooth device detects that the working power of the Bluetooth module is greater than or equal to the preset power threshold, or when the master Bluetooth device detects that duration in which the working power of the Bluetooth module is less than the preset power threshold does not exceed preset duration, determining, by the master Bluetooth device, that data is being transmitted with the slave Bluetooth device by using the Bluetooth connection.

4. The method according to any one of claims 1 to 3, wherein before the breaking, by the master Bluetooth device, the Bluetooth connection to the slave Bluetooth device, the method further comprises:
instructing (S2400, S3700), by the master Bluetooth device, the slave Bluetooth device to enter a pairing state or a to-be-connected state, wherein:

when the slave Bluetooth device is in the to-be-connected state, the slave Bluetooth device may be found by a master Bluetooth device that was paired with the slave Bluetooth device, and a Bluetooth connection can be established, and when the slave Bluetooth device is in the pairing state, the slave Bluetooth device may be found by a master Bluetooth device that has not been paired with the slave Bluetooth device, and pairing can be performed by means of key pairing, to establish a Bluetooth connection.

5. The method according to any one of claims 1 to 4, wherein after the breaking, by the master Bluetooth device, the Bluetooth connection to the slave Bluetooth device, the method further comprises:
disabling (S2600, S3900), by the master Bluetooth device, a Bluetooth function of the master Bluetooth device.

6. A master Bluetooth device (10), wherein the master Bluetooth device is configured to establish a Bluetooth connection to a slave Bluetooth device, the slave Bluetooth device being a sound box or headset configured to receive a data transmission comprising audio data; the master Bluetooth device comprises a processor (12), a memory, and a Bluetooth module (11); and the processor, the memory, and the Bluetooth module are connected by using a bus system, wherein

the memory is configured to store an instruction; the Bluetooth module (11) is configured to send a message according to control of the processor, so as to implement Bluetooth communication between the master Bluetooth device and the slave Bluetooth device; and
the processor (12) is configured to invoke the instruction stored in the memory to perform the following steps:

determining (S 11 00) whether the master Bluetooth device is performing data transmission with the slave Bluetooth device by using the Bluetooth connection; and
breaking (S 1200) the Bluetooth connection between the master Bluetooth device and the slave Bluetooth device when it is determined that the master Bluetooth device is not performing data transmission with the slave Bluetooth device by using the Bluetooth connection.
wherein the determining whether the master Bluetooth device is performing data transmission with the slave Bluetooth device by using the Bluetooth connection specifically comprises:
determining, according to a working power of the Bluetooth module, whether the master Bluetooth device is perform data transmission with the slave Bluetooth device by using the Bluetooth connection.

7. The master Bluetooth device according to claim 6, wherein the determining (S 1100), according to a working power of the Bluetooth module, whether the master Bluetooth device is performing data transmission with the slave Bluetooth device by using the Bluetooth connection specifically comprises:

collecting statistics on a sum of working powers of the Bluetooth module in preset duration; and when it is determined that the sum of the working powers is less than a preset power threshold, determining that the master Bluetooth device is not performing data transmission with the slave Bluetooth device by using the Bluetooth connection; or when it is determined that the sum of the working powers is greater than or equal to the preset power threshold, determining that the master Bluetooth device is performing data transmission with the slave Bluetooth device by using the Bluetooth connection.

8. The master Bluetooth device according to claim 6, wherein the determining (S 1100), according to a working power of the Bluetooth module, whether the master Bluetooth device is performing data transmission with the slave Bluetooth device by using the Bluetooth connection specifically comprises:

starting timing when it is detected that the working power of the Bluetooth module is less than a preset power threshold; and when it is detected that duration in which the working power of the Bluetooth module is less than the preset power threshold exceeds preset duration, determining that the master Bluetooth device is not performing no data transmission with the slave Bluetooth device by using the Bluetooth connection; or when it is detected that the working power of the Bluetooth module is greater than or equal to the preset power threshold, or when it is detected that duration in which the working power of the Bluetooth module is less than the preset power threshold does not exceed preset duration, determining that the master Bluetooth device is performing data transmission with the slave Bluetooth device by using the Bluetooth connection.

9. The master Bluetooth device according to any one of claims 6 to 8, wherein before breaking the Bluetooth connection between the master Bluetooth device and the slave Bluetooth device, the processor (12) is further configured to instruct (S2400, S3700) the slave Bluetooth device to enter a pairing state or a to-be-connected state, wherein:

when the slave Bluetooth device is in the to-be-connected state, the slave Bluetooth device may be found by a master Bluetooth device that was paired with the slave Bluetooth device, and a Bluetooth connection can be established, and when the slave Bluetooth device is in the pairing state, the slave Bluetooth device may be found by a master Bluetooth device that has not been paired with the slave Bluetooth device, and pairing can be performed by means of key pairing, to establish a Bluetooth connection.

10. The master Bluetooth device according to any one of claims 6 to 9, wherein after breaking the Bluetooth connection between the master Bluetooth device and the slave Bluetooth device, the processor (12) is further configured to:
disable (S2600, S3900) a Bluetooth function of the master Bluetooth device.

**Patentansprüche**

1. Bluetooth-Verbindungsverwaltungsverfahren, wobei das Verfahren auf ein Szenario, in dem eine Master-Bluetooth-Vorrichtung eine Bluetooth-Verbindung mit einer Slave-Bluetooth-Vorrichtung hergestellt hat, angewendet wird, wobei die Slave-Bluetooth-Vorrichtung ein Resonanzkörper oder ein Headset ist, die konfiguriert sind, um eine Datenübertragung, die Audiodaten umfasst, zu empfangen und das Verfahren umfasst:

Bestimmen (S1100), durch die Master-Bluetooth-Vorrichtung, ob Daten mit der Slave-Bluetooth-Vorrichtung durch Verwenden der Bluetooth-Verbindung übertragen werden; und Unterbrechen (S1200), durch die Master-Bluetooth-Vorrichtung, der Bluetooth-Verbindung mit der Slave-Bluetooth-Vorrichtung, wenn die Master-Bluetooth-Vorrichtung bestimmt, dass keine Daten mit der Slave-Bluetooth-Vorrichtung durch Verwenden der Bluetooth-Verbindung übertragen werden, wobei das Bestimmen, durch die Master-Bluetooth-Vorrichtung, ob Daten mit der Slave-Bluetooth-Vorrichtung durch Verwenden der Bluetooth-Verbindung übertragen werden, umfasst: Bestimmen, durch die Master-Bluetooth-Vorrichtung gemäß einer Arbeitsleistung eines Bluetooth-Moduls in der Master-Bluetooth-Vorrichtung, ob Daten mit der Slave-Bluetooth-Vorrichtung durch Verwenden der Bluetooth-Verbindung übertragen werden.

**2.** Verfahren nach Anspruch 1, wobei das Bestimmen (S1100), durch die Master-Bluetooth-Vorrichtung gemäß einer Arbeitsleistung eines Bluetooth-Moduls in der Master-Bluetooth-Vorrichtung, ob Daten mit der Slave-Bluetooth-Vorrichtung durch Verwenden der Bluetooth-Verbindung übertragen werden, umfasst:

Sammeln von Statistiken, durch die Master-Bluetooth-Vorrichtung, über eine Summe von Arbeitsleistungen des Bluetooth-Moduls in einer voreingestellten Dauer; und wenn die Master-Bluetooth-Vorrichtung bestimmt, dass die Summe der Arbeitsleistungen kleiner als ein voreingestellter Leistungsschwellenwert ist, Bestimmen, durch die Master-Bluetooth-Vorrichtung, dass keine Daten mit der Slave-Bluetooth-Vorrichtung durch Verwenden der Bluetooth-Verbindung übertragen werden; oder wenn die Master-Bluetooth-Vorrichtung bestimmt, dass die Summe der Arbeitsleistungen größer als oder gleich einem voreingestellten Leistungsschwellenwert ist, Bestimmen, durch die Master-Bluetooth-Vorrichtung, dass Daten mit der Slave-Bluetooth-Vorrichtung durch Verwenden der Bluetooth-Verbindung übertragen werden.

**3.** Verfahren nach Anspruch 1, wobei das Bestimmen (S1100), durch die Master-Bluetooth-Vorrichtung gemäß einer Arbeitsleistung eines Bluetooth-Moduls in der Master-Bluetooth-Vorrichtung, ob Daten mit der Slave-Bluetooth-Vorrichtung durch Verwenden der Bluetooth-Verbindung übertragen werden, umfasst:

Starten eines Zeitablaufs, wenn die Master-Bluetooth-Vorrichtung erkennt, dass die Arbeitsleistung des Bluetooth-Moduls kleiner als ein voreingestellter Leistungsschwellenwert ist; und wenn die Master-Bluetooth-Vorrichtung erkennt, dass eine Dauer, in der die Arbeitsleistung des Bluetooth-Moduls kleiner als der voreingestellte Leistungsschwellenwert ist, die voreingestellte Dauer überschreitet, Bestimmen, durch die Master-Bluetooth-Vorrichtung, dass keine Daten mit der Slave-Bluetooth-Vorrichtung durch Verwenden der Bluetooth-Verbindung übertragen werden; oder wenn die Master-Bluetooth-Vorrichtung erkennt, dass die Arbeitsleistung des Bluetooth-Moduls größer als oder gleich dem voreingestellten Leistungsschwellenwert ist oder, wenn die Master-Bluetooth-Vorrichtung erkennt, dass die Dauer, in der die Arbeitsleistung des Bluetooth-Moduls kleiner als der voreingestellte Leistungsschwellenwert ist, die voreingestellte Dauer nicht überschreitet, Bestimmen durch die Master-Bluetooth-Vorrichtung, dass Daten mit der Slave-Bluetooth-Vorrichtung durch Verwenden der Bluetooth-Verbindung übertragen werden.

**4.** Verfahren nach einem der Ansprüche 1 bis 3, wobei, vor dem Unterbrechen, durch die Master-Bluetooth-Vorrichtung, der Bluetooth-Verbindung mit der Slave-Bluetooth-Vorrichtung, das Verfahren ferner umfasst:
Anweisen (S2400, S3700), durch die Bluetooth-Master-Vorrichtung, der Slave-Bluetooth-Vorrichtung in einen Paarungszustand oder einen zu verbindenden Zustand einzutreten, wobei:

wenn sich die Slave-Bluetooth-Vorrichtung in dem zu verbindenden Zustand befindet, die Slave-Bluetooth-Vorrichtung durch eine Bluetooth-Master-Vorrichtung, die mit der Slave-Bluetooth-Vorrichtung gepaart wurde, gefunden werden könnte und eine Bluetooth-Verbindung hergestellt werden kann und wenn sich die Slave-Bluetooth-Vorrichtung in dem Paarungszustand befindet, die Slave-Bluetooth-Vorrichtung durch eine Master-Bluetooth-Vorrichtung, die nicht mit der Slave-Bluetooth-Vorrichtung gepaart wurde, gefunden werden könnte und ein Paaren mittels Schlüsselpaarung durchgeführt werden kann, um eine Bluetooth-Verbindung herzustellen.

**5.** Verfahren nach einem der Ansprüche 1 bis 4, wobei, nach dem Unterbrechen, durch die Master-Bluetooth-Vorrichtung, der Bluetooth-Verbindung mit der Slave-Bluetooth-Vorrichtung, das Verfahren ferner umfasst:
Deaktivieren (S2600, S3900), durch die Master-Bluetooth-Vorrichtung, einer Bluetooth-Funktion der Master-Bluetooth-Vorrichtung.

**6.** Master-Bluetooth-Vorrichtung (10), wobei die Master-Bluetooth-Vorrichtung konfiguriert ist, um eine Bluetooth-Verbindung mit einer Slave-Bluetooth-Vorrichtung herzustellen, wobei die Slave-Bluetooth-Vorrichtung ein Resonanzkörper oder ein Headset ist, die konfiguriert sind, um eine Datenübertragung, die Audiodaten umfasst, zu empfangen; die Master-Bluetooth-Vorrichtung einen Prozessor (12), einen Speicher und ein Bluetooth-Modul (11) umfasst; und der Prozessor, der Speicher und das Bluetooth-Modul durch Verwenden eines Bussystems verbunden sind, wobei

der Speicher konfiguriert ist, um eine Anweisung abzulegen; das Bluetooth-Modul (11) konfiguriert ist, um eine Nachricht gemäß einer Steuerung des Prozessors zu senden, um eine Bluetooth-Kommunikation zwischen der Master-Bluetooth-Vorrichtung und der Slave-Bluetooth-Vorrichtung zu implementieren; und

der Prozessor (12) konfiguriert ist, um die Anweisung, die in dem Speicher abgelegt ist, aufzurufen, um die folgenden Schritte durchzuführen:

Bestimmen (S1100), ob die Master-Bluetooth-Vorrichtung die Datenübertragung mit der Slave-Bluetooth-Vorrichtung durch Verwenden der Bluetooth-Verbindung durchführt; und

Unterbrechen (S1200) der Bluetooth-Verbindung zwischen der Master-Bluetooth-Vorrichtung und der Slave-Bluetooth-Vorrichtung, wenn bestimmt wird, dass die Master-Bluetooth-Vorrichtung keine Datenübertragung mit der Slave-Bluetooth-Vorrichtung durch Verwenden der Bluetooth-Verbindung durchführt.

wobei das Bestimmen, ob die Master-Bluetooth-Vorrichtung die Datenübertragung mit der Slave-Bluetooth-Vorrichtung durch Verwenden der Bluetooth-Verbindung durchführt, speziell umfasst:

Bestimmen, gemäß einer Arbeitsleistung des Bluetooth-Moduls, ob die Master-Bluetooth-Vorrichtung die Datenübertragung mit der Slave-Bluetooth-Vorrichtung durch Verwenden der Bluetooth-Verbindung durchführt.

7. Master-Bluetooth-Vorrichtung nach Anspruch 6, wobei das Bestimmen (S1100) gemäß einer Arbeitsleistung des Bluetooth-Moduls, ob das Master-Bluetooth-Vorrichtung die Datenübertragung mit der Slave-Bluetooth-Vorrichtung durch Verwenden der Bluetooth-Verbindung durchführt, speziell umfasst:

Sammeln von Statistiken über eine Summe der Arbeitsleistungen des Bluetooth-Moduls in der voreingestellten Dauer; und

wenn bestimmt wird, dass die Summe der Arbeitsleistungen kleiner als ein voreingestellter Leistungsschwellenwert ist, Bestimmen, dass die Master-Bluetooth-Vorrichtung keine Datenübertragung mit der Slave-Bluetooth-Vorrichtung durch Verwenden der Bluetooth-Verbindung durchführt; oder wenn bestimmt wird, dass die Summe der Arbeitsleistungen größer als oder gleich dem voreingestellten Leistungsschwellenwert ist, Bestimmen, dass die Master-Bluetooth-Vorrichtung die Datenübertragung mit der Slave-Bluetooth-Vorrichtung durch Verwenden der Bluetooth-Verbindung durchführt.

8. Master-Bluetooth-Vorrichtung nach Anspruch 6, wobei das Bestimmen (S1100), gemäß einer Arbeitsleistung des Bluetooth-Moduls, ob das Master-Bluetooth-Vorrichtung die Datenübertragung mit der Slave-Bluetooth-Vorrichtung durch Verwenden der Bluetooth-Verbindung durchführt, speziell umfasst:

Starten des Zeitablaufs, wenn erkannt wird, dass die Arbeitsleistung des Bluetooth-Moduls kleiner als ein voreingestellter Leistungsschwellenwert ist; und

wenn erkannt wird, dass die Dauer, in der die Arbeitsleistung des Bluetooth-Moduls kleiner als der voreingestellte Leistungsschwellenwert ist, die voreingestellte Dauer überschreitet, Bestimmen, dass die Master-Bluetooth-Vorrichtung keine Datenübertragung mit der Slave-Bluetooth-Vorrichtung durch Verwenden der Bluetooth-Verbindung nicht durchführt; oder wenn erkannt wird, dass die Arbeitsleistung des Bluetooth-Moduls größer als oder gleich des voreingestellten Leistungsschwellenwerts ist, oder wenn erkannt wird, dass die Dauer, in der die Arbeitsleistung des Bluetooth-Moduls kleiner als der voreingestellte Leistungsschwellenwert ist, die voreingestellte Dauer nicht überschreitet, Bestimmen, dass die Master-Bluetooth-Vorrichtung die Datenübertragung mit der Slave-Bluetooth-Vorrichtung durch Verwenden der Bluetooth-Verbindung durchführt.

9. Master-Bluetooth-Vorrichtung nach einem der Ansprüche 6 bis 8, wobei, vor dem Unterbrechen der Bluetooth-Verbindung zwischen der Master-Bluetooth-Vorrichtung und der Slave-Bluetooth-Vorrichtung, der Prozessor (12) ferner konfiguriert ist, um die Slave-Bluetooth-Vorrichtung anzuweisen (S2400, S3700) in einen Paarungszustand oder einen zu verbindenden Zustand einzutreten, wobei:

wenn sich die Slave-Bluetooth-Vorrichtung in dem zu verbindenden Zustand befindet, die Slave-Bluetooth-Vorrichtung durch eine Bluetooth-Master-Vorrichtung, die mit der Slave-Bluetooth-Vorrichtung gepaart wurde, gefunden werden könnte und eine Bluetooth-Verbindung hergestellt werden kann und

wenn sich die Slave-Bluetooth-Vorrichtung in dem Paarungszustand befindet, die Slave-Bluetooth-Vorrichtung durch eine Master-Bluetooth-Vorrichtung, die nicht mit der Slave-Bluetooth-Vorrichtung gepaart wurde, gefunden werden könnte und ein Paaren mittels Schlüsselpaarung durchgeführt werden kann, um eine Bluetooth-Verbindung herzustellen.

10. Master-Bluetooth-Vorrichtung nach einem der Ansprüche 6 bis 9, wobei, nach dem Unterbrechen der Bluetooth-Verbindung zwischen der Master-Bluetooth-Vorrichtung und der Slave-Bluetooth-Vorrichtung, der Prozessor (12) ferner konfiguriert ist zum: Deaktivieren (S2600, S3900) einer Bluetooth-Funktion der Master-Bluetooth-Vorrichtung.

## Revendications

1. Procédé de gestion de connexion Bluetooth, dans lequel le procédé est appliqué à un scénario dans lequel un dispositif Bluetooth maître a établi une connexion Bluetooth avec un dispositif Bluetooth esclave, le dispositif Bluetooth esclave étant un lecteur acoustique ou un casque d'écoute configuré pour recevoir une transmission de données comprenant des données audio, et le procédé comprend :

   la détermination (S1100), par le dispositif Bluetooth maître, du fait de savoir si des données sont en train d'être transmises avec le dispositif Bluetooth esclave à l'aide de la connexion Bluetooth ; et
   l'interruption (S1200), par le dispositif Bluetooth maître, de la connexion Bluetooth avec le dispositif Bluetooth esclave lorsque le dispositif Bluetooth maître détermine qu'aucune donnée n'est en train d'être transmise avec le dispositif Bluetooth esclave à l'aide de la connexion Bluetooth,
   dans lequel la détermination, par le dispositif Bluetooth maître, du fait de savoir si des données sont en train d'être transmises avec le dispositif Bluetooth esclave à l'aide de la connexion Bluetooth comprend :
   la détermination, par le dispositif Bluetooth maître selon une puissance de travail d'un module Bluetooth dans le dispositif Bluetooth maître, du fait de savoir si des données sont en train d'être transmises avec le dispositif Bluetooth esclave à l'aide de la connexion Bluetooth.

2. Procédé selon la revendication 1, dans lequel la détermination (S1100), par le dispositif Bluetooth maître en fonction d'une puissance de travail d'un module Bluetooth dans le dispositif Bluetooth maître, du fait de savoir si des données sont en train d'être transmises avec le dispositif Bluetooth esclave à l'aide de la connexion Bluetooth comprend :

   la collecte de statistiques, par le dispositif Bluetooth maître, concernant une somme de puissances de travail du module Bluetooth pendant une durée prédéfinie ; et
   lorsque le dispositif Bluetooth maître détermine que la somme des puissances de travail est inférieure à un seuil de puissance prédéfini, la détermination, par le dispositif Bluetooth maître, selon laquelle aucune donnée n'est en train d'être transmise avec le dispositif Bluetooth esclave à l'aide de la connexion Bluetooth ; ou lorsque le dispositif Bluetooth maître détermine que la somme des puissances de travail est supérieure ou égale à un seuil de puissance prédéfini, la détermination, par le dispositif Bluetooth maître, selon laquelle des données sont en train d'être transmises avec le dispositif Bluetooth esclave à l'aide de la connexion Bluetooth.

3. Procédé selon la revendication 1, dans lequel la détermination (S1100), par le dispositif Bluetooth maître selon une puissance de travail d'un module Bluetooth dans le dispositif Bluetooth maître, du fait de savoir si des données sont en train d'être transmises avec le dispositif Bluetooth esclave à l'aide de la connexion Bluetooth comprend :

   le démarrage d'une synchronisation lorsque le dispositif Bluetooth maître détecte que la puissance de travail du module Bluetooth est inférieure à un seuil de puissance prédéfini ; et lorsque le dispositif Bluetooth maître détecte que la durée pendant laquelle la puissance de travail du module Bluetooth est inférieure au seuil de puissance prédéfini dépasse la durée prédéfinie, la détermination, par le dispositif Bluetooth maître, selon laquelle aucune donnée n'est en train d'être transmise avec le dispositif Bluetooth esclave à l'aide de la connexion Bluetooth ; ou lorsque le dispositif Bluetooth maître détecte que la puissance de travail du module Bluetooth est supérieure ou égale au seuil de puissance prédéfini, ou lorsque le dispositif Bluetooth maître détecte que la durée pendant laquelle la puissance de travail du module Bluetooth est inférieure au seuil de puissance prédéfini ne dépasse pas la durée prédéfinie, la détermination, par le dispositif Bluetooth maître, selon laquelle des données sont en train d'être transmises avec le dispositif Bluetooth esclave à l'aide de la connexion Bluetooth.

4. Procédé selon l'une quelconque des revendications 1 à 3, dans lequel, avant l'interruption, par le dispositif Bluetooth maître, de la connexion Bluetooth avec le dispositif Bluetooth esclave, le procédé comprend en outre :
   le fait d'ordonner (S2400, S3700), par le dispositif Bluetooth maître, au dispositif Bluetooth esclave d'entrer dans un état d'appariement ou dans un état à connecter, dans lequel :

   lorsque le dispositif Bluetooth esclave est dans l'état à connecter, le dispositif Bluetooth esclave peut être trouvé par un dispositif Bluetooth maître qui a été apparié avec le dispositif Bluetooth esclave, et une connexion Bluetooth peut être établie, et
lorsque le dispositif Bluetooth esclave est dans l'état d'appariement, le dispositif Bluetooth esclave peut être trouvé par un dispositif Bluetooth maître qui n'a pas été apparié avec le dispositif Bluetooth esclave, et un appariement peut être réalisé au moyen d'un appariement de clés, pour établir une connexion Bluetooth.

**5.** Procédé selon l'une quelconque des revendications 1 à 4, dans lequel, après l'interruption, par le dispositif Bluetooth maître, de la connexion Bluetooth avec le dispositif Bluetooth esclave, le procédé comprend en outre :
la désactivation (S2600, S3900), par le dispositif Bluetooth maître, d'une fonction Bluetooth du dispositif Bluetooth maître.

**6.** Dispositif Bluetooth maître (10), dans lequel le dispositif Bluetooth maître est configuré pour établir une connexion Bluetooth avec un dispositif Bluetooth esclave, le dispositif Bluetooth esclave étant un lecteur acoustique ou un casque d'écoute configuré pour recevoir une transmission de données comprenant des données audio ; le dispositif Bluetooth maître comprend un processeur (12), une mémoire et un module Bluetooth (11) ; et le processeur, la mémoire et le module Bluetooth sont connectés à l'aide d'un système de bus, dans lequel

la mémoire est configurée pour stocker un ordre ;
le module Bluetooth (11) est configuré pour envoyer un message selon la commande du processeur, de manière à mettre en oeuvre une communication Bluetooth entre le dispositif Bluetooth maître et le dispositif Bluetooth esclave ; et
le processeur (12) est configuré pour appeler l'ordre stocké dans la mémoire pour réaliser les étapes suivantes :

déterminer (S1 100) si le dispositif Bluetooth maître est en train de réaliser une transmission de données avec le dispositif Bluetooth esclave à l'aide de la connexion Bluetooth ; et
interrompre (S1200) la connexion Bluetooth entre le dispositif Bluetooth maître et le dispositif Bluetooth esclave lorsqu'il est déterminé que le dispositif Bluetooth maître n'est pas en train de réaliser une transmission de données avec le dispositif Bluetooth esclave à l'aide de la connexion Bluetooth.
dans lequel la détermination selon laquelle le dispositif Bluetooth maître est en train de réaliser une transmission de données avec le dispositif Bluetooth esclave à l'aide de la connexion Bluetooth comprend spécifiquement :
la détermination, selon une puissance de travail du module Bluetooth, du fait de savoir si le dispositif Bluetooth maître est en train de réaliser une transmission de données avec le dispositif Bluetooth esclave à l'aide de la connexion Bluetooth.

**7.** Dispositif Bluetooth maître selon la revendication 6, dans lequel la détermination (S1100), selon une puissance de travail du module Bluetooth, du fait de savoir si le dispositif Bluetooth maître est en train de réaliser une transmission de données avec le dispositif Bluetooth esclave à l'aide de la connexion Bluetooth comprend spécifiquement :

la collecte de statistiques concernant une somme de puissances de travail du module Bluetooth pendant une durée prédéfinie ; et
lorsqu'il est déterminé que la somme des puissances de travail est inférieure à un seuil de puissance prédéfini, la détermination selon laquelle le dispositif Bluetooth maître n'est pas en train de réaliser une transmission de données avec le dispositif Bluetooth esclave à l'aide de la connexion Bluetooth ; ou lorsqu'il est déterminé que la somme des puissances de travail est supérieure ou égale au seuil de puissance prédéfini, la détermination selon laquelle le dispositif Bluetooth maître est en train de réaliser une transmission de données avec le dispositif Bluetooth esclave à l'aide de la connexion Bluetooth.

**8.** Dispositif Bluetooth maître selon la revendication 6, dans lequel la détermination (S1100), selon une puissance de travail du module Bluetooth, du fait de savoir si le dispositif Bluetooth maître est en train de réaliser une transmission de données avec le dispositif Bluetooth esclave à l'aide de la connexion Bluetooth comprend spécifiquement :

le démarrage d'une synchronisation lorsqu'il est détecté que la puissance de travail du module Bluetooth est inférieure à un seuil de puissance prédéfini ; et
lorsqu'il est détecté que la durée pendant laquelle la puissance de travail du module Bluetooth est inférieure au seuil de puissance prédéfini dépasse la durée prédéfinie, la détermination selon laquelle le dispositif Bluetooth maître n'est pas en train de réaliser une transmission de données avec le dispositif Bluetooth esclave à l'aide de la connexion Bluetooth ; ou lorsqu'il est détecté que la puissance de travail du module Bluetooth est supérieure ou égale au seuil de puissance prédéfini, ou lorsqu'il est détecté que la durée pendant laquelle la puissance de travail du module Bluetooth est inférieure au seuil de puissance prédéfini ne dépasse pas la durée prédéfinie, la détermination selon laquelle le dispositif Bluetooth maître est en train de réaliser une transmission de données avec le dispositif Bluetooth esclave à l'aide de la connexion Bluetooth.

**9.** Dispositif Bluetooth maître selon l'une quelconque des revendications 6 à 8, dans lequel, avant l'interruption de la connexion Bluetooth entre le dispositif Bluetooth maître et le dispositif Bluetooth esclave, le processeur (12) est en outre configuré pour ordonner (S2400, S3700) au dispositif Bluetooth esclave d'entrer dans un état d'appariement ou dans un état à connecter, dans lequel :

lorsque le dispositif Bluetooth esclave est dans l'état à connecter, le dispositif Bluetooth esclave peut être trouvé par un dispositif Bluetooth maître qui a été apparié avec le dispositif Bluetooth esclave, et une connexion Bluetooth peut être établie, et
lorsque le dispositif Bluetooth esclave est dans l'état d'appariement, le dispositif Bluetooth esclave peut être trouvé par un dispositif Bluetooth maître qui n'a pas été apparié avec le dispositif Bluetooth esclave, et un appariement peut être réalisé au moyen d'un appariement de clés, pour établir une connexion Bluetooth.

**10.** Dispositif Bluetooth maître selon l'une quelconque des revendications 6 à 9, dans lequel, après l'interruption de la connexion Bluetooth entre le dispositif Bluetooth maître et le dispositif Bluetooth esclave, le processeur (12) est en outre configuré pour : désactiver (S2600, S3900) une fonction Bluetooth du dispositif Bluetooth maître.

Bluetooth ⬭

⟹

Bluetooth ⬬

**FIG. 1a**

WLAN  Bluetooth  Settings

**FIG. 1b**

FIG. 2

FIG. 3

S1200
The smartphone A breaks the
Bluetooth connection to the
Bluetooth sound box

Smartphone
A

S1100
Determine whether
data is being
transmitted with
the Bluetooth
sound box by using
a Bluetooth
connection

Bluetooth
sound box

Smartphone B

FIG. 4

FIG. 5

A Bluetooth sound box APP determines whether a Bluetooth function of a smartphone A is enabled

S2100

—No—

Yes

The Bluetooth sound box APP enables the Bluetooth function of the smartphone A

S2110

The Bluetooth sound box APP establishes a Bluetooth connection to a Bluetooth sound box

S2200

The Bluetooth sound box APP determines whether an exit instruction is received

S2300

Yes

S2500

S2600

Instruct the Bluetooth sound box to enter a to-be-connected state or a pairing state

S2400

The Bluetooth sound box APP breaks the Bluetooth connection to the Bluetooth sound box

The Bluetooth sound box APP disables the Bluetooth function of the smartphone A

FIG. 6

A smartphone A detects that a
Bluetooth sound box APP is
enabled                          ⌇ S3100

The smartphone A determines
whether the Bluetooth sound
box APP has a permission to       ⌇ S3200
use a Bluetooth function

Yes

The smartphone A determines   ⌇ S3300
whether the Bluetooth
function is enabled            No

Yes

S3500 ⌇ The smartphone A establishes
a Bluetooth connection to a   ◄──  The smartphone A
Bluetooth sound box                enables the          ⌇ S3400
                                   Bluetooth function

S3600 ⌇ The smartphone A detects that
the Bluetooth sound box APP
is enabled to exit

S3700 ⌇ The smartphone A instructs the
Bluetooth sound box to enter a
to-be-connected state or a
pairing state

S3800 ⌇ The smartphone A breaks the        The smartphone A
Bluetooth connection to the   ──►   disables the
Bluetooth sound box                 Bluetooth function  ⌇ S3900
                                    of the smartphone A

FIG. 7

Master Bluetooth device 10

| Bluetooth unit 11 | ←→ | Processing unit 12 |

FIG. 8

Master Bluetooth device 10

11

12

Bluetooth unit ←→ Processing unit

Power detection unit 121

APP detection unit 122

Bluetooth control unit 123

FIG. 9

Apparatus 20

Running status detection unit 21

Bluetooth detection unit 22

Bluetooth control unit 23

FIG. 10

Apparatus 20

Running status detection unit 21

Bluetooth detection unit 22

Bluetooth control unit 23

Processing unit 25

Storage unit 24

FIG. 11

Apparatus 30

APP detection unit 31

Bluetooth detection unit 32

Bluetooth control unit 33

FIG. 12

Apparatus 30

APP detection unit 31

Bluetooth detection unit 32

Bluetooth control unit 33

Processing unit 35

Storage unit 34

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014208342 A1